(19) Europäisches Patentamt
European Patent Office
Office européen des brevets

(11) Publication number: **0 200 980 B1**

(12) # EUROPEAN PATENT SPECIFICATION

(45) Date of publication of patent specification: **31.01.90**

(51) Int. Cl.$^5$: **C 07 F 9/38**

(21) Application number: **86105502.8**

(22) Date of filing: **21.04.86**

(54) **A process for hydrolyzing substituted methylenediphosphonic acid esters.**

(30) Priority: **30.04.85 IT 2054385**

(43) Date of publication of application:
**12.11.86 Bulletin 86/46**

(45) Publication of the grant of the patent:
**31.01.90 Bulletin 90/05**

(84) Designated Contracting States:
**AT BE CH DE FR GB LI LU NL SE**

(56) References cited:
**DE-A-2 229 087**
**DE-A-2 745 982**

(73) Proprietor: **ISTITUTO GENTILI S.p.A.**
**Via Mazzini, 112**
**I-56100 Pisa (IT)**

(72) Inventor: **Staibano, Giorgio**
**Via Mazzini, 112**
**I-56100 Pisa (IT)**

(74) Representative: **Bianchetti, Giuseppe**
**Studio Consulenza Brevettuale Via Rossini, 8**
**I-20122 Milan (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 200 980 B1**

Courier Press, Leamington Spa, England.

## Description

The present invention relates to a process for hydrolyzing substituted methylenediphosphonic acid esters, of general formula II

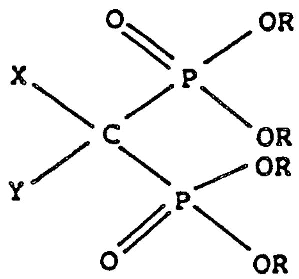

(II)

wherein R is a $C_1$—$C_4$ straight or branched alkyl group, and X and Y, which may be the same or different, are hydrogen, or a halogen atom. Halogen means F, Cl.

Processes for hydrolyzing esters of formula II, to obtain the corresponding methylenediphosphonic acids, and from these the corresponding salts, are known, for example, from U.S. Patent No. 3,213,030. Said processes use strong and concentrated acids at ebollition, for a long time. Particularly the ester of formula I, wherein R = i-propyl and X = Y = Cl, i.e. $Cl_2[PO(OC_3H_7i)_2]_2$ is boiled with concentrated hydrochloric acid, to obtain dichloromethylenediphosphonic acid: $Cl_2C[PO(OH_2]_2$. Said acid is then recovered by concentration of the reaction mixture, followed by two azeotropic distillations with isopropanol, to remove any traces of water and hydrochloric acid.

Said process presents some operative drawbacks connected to the use of boiling concentrated hydrochloric acid and to the subsquent azeotropic distillations.

In literature anotehr process for obtaining the above dichloromethylenediphosphonic acid is known, consisting in pyrolyzing the corresponding tetraisopropyl ester. During this process, evolution of propene (gas) takes place, in a 4 moles/1 mole of ester ration, which constitutes a serious recovery and elimination problem, in industry.

A general method for hydrolyzing phosphonic acid ester is described in DE—A—2,745,982. This method uses only water (double molar amount) and high pressures which entail high reaction temperatures.

This method appears to be unsuitable for thermally labile comounds or for halogen subsituted phosphonates.

The process of the present invention allows to hydrolyze the esters of formula II, using only water, at ebollition, during a certain time. The reaction, which takes place in complete absence of chlorides, alows to obtain the corresponding free diphosphonic acids in high purity, which may be directly salified by means of alkali hydroxides in the aqueous solution from the hydrolysis, without isolating or purifying them.

The hypothized hydrolysis mechanism is the following: the starting ester molecule, which is initially neutral, within a short time undergoes a partial hydrolysis, releasing a minimum amount of hydrogenions, sufficient to catalyze the hydrolysis. Said hypothesis is enhanced by the fact that, whilst usually the hydrolysis is complete with 10—12 hours, the hydrolysis time is shortened by adding initially a small amount of the same methylenediphosphonic acid in solution, from a previous preparation.

The process of the invention is therefore very simple, and provides remarkable advantages both by the economic and environmental points of view in the preparation of substituted methylenediphosphonic acids and salts.

The process of the invention is described in more detail by the following non-limiting example.

### Example

Dichloromethylenediphosphonic acid sodium salt

a) Hydrolysis

250 Ml of deionized water and 50 g of pure tetraisopropyl dichloromethylenediphosphonate were placed in a three-neck flask, equipped with Vigreaux column, distillation refrigerator and mechanic stirrer. The mixture was heated to ebollition (temperature of the head termometer: 80°C), keeping that temperature during all the hydrolysis time.

The pH of the mixture was initially near neutral (between 6 and 7), after some minutes of ebollition, it fell to markedly acid values. The completion of the hydrolysis was checked by analytical measurement of the dichloromethylenediphosphonic acid content of the solution. The solution was decolorized by means of active charcoal, analyzed again to exactly measure its acid content, then directly used in the next step.

b) Salification

To the solution of step a), after cooling with ice-water, the stoichiometric amount of sodium hydroxyde in a 20% aqueous solution was added, to obtain the bisodium salt. The pH was adjusted to 4.2—4.5. The

reaction mixture was cooled, treated with active charcoal, filtered, warm concentrated till turbidity, then left to crystallize, recovering the product, which was combined with the first one. After drying, 41.5 g of the dichloromethylenediphosphonic aicd bisodium tetrahydrate salt of formula $Cl_2C(PO_3NHa)_2 \cdot 4H_2O$ were obtained. The purity of the compound was found to be higher than 99%, and therefore suitable also for use in oral and parenteral pharmaceutical compositions.

| Elemental analysis: | C | H | Cl | P |
|---|---|---|---|---|
| calc. %: | 3.33 | 2.97 | 19.65 | 17.16 |
| found %: | 3.48 | 2.87 | 20.06 | 16.87 |

Complexometric titre: 99.7%.
$H_2O$ Content (K.F.): calc. % 19.94; found % 20.2.
$^{31}P$—NMR Spectrum: sharp peak at −13.4 ppm referred to 85% $H_3PO_4$.

**Claims**

1. A process for preparing subsituted methylenediphosphonic acids of general formula I

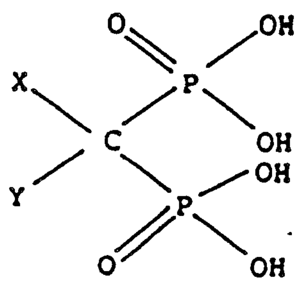

(I)

wherein X and Y, which may be the same or different, are hydrogen, or halogen atoms, which process consists of hydrolyzing, using water only, at the boiling temperature of water, the corresponding esters of general formula II

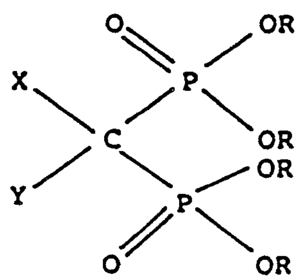

(II)

wherein X and Y have the above mentioned meanings and R is a $C_1$—$C_4$ straight or branched alkyl group, optionally in the presence of catalytic amounts of an aqueous solution of the desired acid, from previous preparations.

2. A process as claimed in claim 1, wherein the tetraalkyl ester of formula II is the isopropyl ester.

3. A process as claimed in claims 1 and 2, wherein the reagent is the dichloromethylenediphosphonic acid tetraisopropyl ester.

4. A process as claimed in claims 1 and 2, wherein the reagent is the difluoromethylenediphosphonic acid tetraisopropyl ester.

**Patentansprüche**

1. Verfahren zur Herstellung substituierter Methylendiphosphonsäuren der allgemeinen Formel I

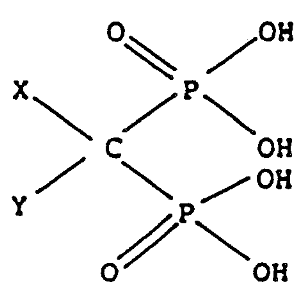

(I)

worin X und Y, die gleich oder unterschiedlich sein können, für Wasserstoff oder Halogenatome stehen, wobei in dem Verfahren unter ausschließlicher Verwendung von Wasser, bei der Siedetemperatur des Wassers, die entsprechenden Ester der allgemeinen Formel II

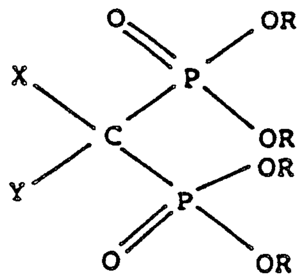

(II)

worin X und Y die ober angegebenen Bedeutungen haben und R ein geradkettiger oder verzweigter $C_1$—$C_4$-Alkylrest ist, gegebenenfalls in Gegenwart katalytischer Mengen einer wässrigen Lösung der gewünschten Säure aus vorhergehenden Herstellungen hydrolysiert werden.

2. Verfahren nach Anspruch 1, worin der Tetraalkylester der Formel II der Isopropylester ist.

3. Verfahren nach Anspruch 1 und 2, worin das Reagens der Dichlormethylendiphosphonsäuretetraisopropylester ist.

4. Verfahren nach Anspruch 1 und 2, worin das Reagens der Difluormethylendiphosphonsäuretetraisopropylester ist.

**Revendications**

1. Un procédé de préparation d'acides méthylènediphosphoniques substitués de la formule générale I

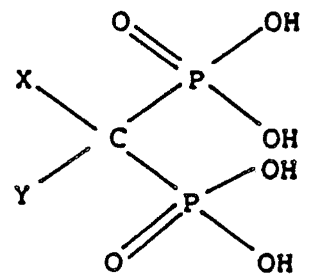

(I)

où X et Y, qui peuvent etre identiques ou différents, sont l'hydrogéne ou des atomes d'halogène, ce procédé consistant à hydrolyser, en utilisant de l'eau seulement, à la température d'ebullition de l'eau, les esters correspondants de la formule générale II

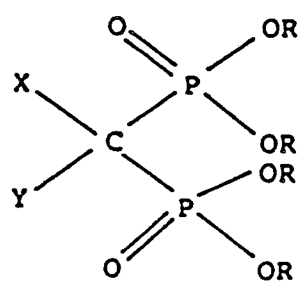

(II)

où X et Y ont les significations sus-mentionnées et R est un groupe alkyle en $C_1$—$C_4$ à chaine droite ou ramifiée, facultativement et présence de quantités catalytiques d'une solution aqueuse de l'acide désiré, provenant de préparations précédentes.

2. Un procédé selon la revendication 1, dans lequel l'ester de tétra-alkyle de formule II est l'ester d'isopropyle.

3. Un procédé selon les revendications 1 et 2, dans lequel le réactif ester l'ester de tétra-isopropyle de l'acide dichlorométhylénediphosphonique.

4. 3. Un procédé selon les revendications 1 et 2, dans lequel le réactif ester l'ester de tétra-isopropyle de l'acide difluorométhylénediphosphonique.